# EUROPEAN PATENT SPECIFICATION

(11) **EP 4 082 817 B1**
(45) Date of publication and mention of the grant of the patent: **26.02.2025**
(21) Application number: 22164641.7
(22) Date of filing: 28.03.2022
(51) Int. Cl.: B60K 6/48, B60K 6/52, B60W 10/04, B60W 10/06, B60W 10/08, B60W 10/30

(54) **VEHICLE CONTROLLER**
FAHRZEUGSTEUERGERÄT
ORGANE DE COMMANDE DE VÉHICULE

(30) Priority: 26.04.2021 JP 2021074158
(43) Date of publication of application: 02.11.2022
(73) Proprietor: Robert Bosch GmbH, 70442 Stuttgart (DE)
(72) Inventor: Park, Kwang, Yokohama-shi, Kanagawa, 2248501 (JP)

(56) References cited:
- JP-A- 2009 096 326
- US-A1- 2009 118 878
- US-A1- 2012 141 297
- US-A1- 2017 282 904

## Description

### BACKGROUND OF THE INVENTION

### 1. Field of the Invention

The present invention relates to a vehicle controller.

### 2. Description of the Background Art

As a hybrid system applied to a vehicle, there is a system that stops operation of an internal combustion engine and thus can allow the vehicle to travel only by drive torque output from a drive motor. As such a system, for example, a system in which a clutch is provided between the internal combustion engine and the drive motor and a system in which a drive wheel driven by the internal combustion engine is separated from a drive wheel driven by the drive motor are available.

Conventionally, a mechanical oil pump geared to a crankshaft of the internal combustion engine is used as a pump that supplies a hydraulic pressure to a hydraulic actuation section such as an automatic transmission. Such a mechanical oil pump cannot supply the hydraulic pressure while the internal combustion engine is stopped. However, it has been requested to promptly initiate clutch engaging operation and gear shift operation by the automatic transmission when a control mode in which the vehicle travels only by the drive torque output from the drive motor (hereinafter also referred to as a "motor drive control mode") is shifted to a control mode in which the vehicle travels by drive torque output from the internal combustion engine and the drive torque output from the drive motor (hereinafter also referred to as a "hybrid drive control mode") . For this reason, in JP-A-2014-213635, a system including an electric oil pump that is driven by an electric motor and can be actuated during a stop of the internal combustion engine has been proposed.

However, in the case where the electric oil pump is always actuated in the motor drive control mode to ensure the sufficient hydraulic pressure for the clutch engaging operation and the gear shift operation by the automatic transmission in preparation for starting the internal combustion engine, electric power is consumed wastefully. This may deplete charged power of a battery that supplies the electric power to the electric oil pump. Document US 2012/141297 A1 discloses a vehicle controller for an hybrid vehicle having an electric oil pump and a mechanical oil pump.

The present invention has been made in view of the above problem, and therefore the present invention has a purpose of providing a vehicle controller capable of promptly supplying a hydraulic pressure to a hydraulic actuation section after a start of an internal combustion engine while reducing an electric power consumption amount by an electric oil pump in a motor drive control mode.

### SUMMARY OF THE INVENTION

In order to solve the above problem, according to an aspect of the present invention, a vehicle controller is provided. The vehicle controller is applied to a vehicle drive system including: an internal combustion engine; at least one drive motor; a hydraulic pressure control unit that controls supply of a hydraulic pressure to at least one hydraulic actuation section; a mechanical oil pump that rotates by power of the internal combustion engine and supplies the hydraulic pressure to the hydraulic pressure control unit; and an electric oil pump that is driven by supplied electric power and supplies the hydraulic pressure to the hydraulic pressure control unit. The vehicle controller includes: a control mode setting section that sets a control mode of the vehicle drive system to a first control mode in which the internal combustion engine is brought into a stopped state and the vehicle travels only by drive torque output from the drive motor or a second control mode in which the internal combustion engine is brought into an operation state and the vehicle travels at least by drive torque output from the internal combustion engine; and a pump control section that controls driving of the electric oil pump. The pump control section executes processing to predict a start of the internal combustion engine while the control mode of the vehicle drive system is set to the first control mode, increase a rotational frequency of the electric oil pump when the start of the internal combustion engine is predicted, and stop driving of the electric oil pump after the internal combustion engine is started and the control mode of the vehicle drive system is set to the second control mode. The pump control section sets a target rotational frequency of the electric oil pump to a specified first target rotational frequency in a period when the control mode of the vehicle drive system is set to the first control mode and the start of the internal combustion engine is not predicted, sets the target rotational frequency of the electric oil pump to a second target rotational frequency that is higher than the first target rotational frequency, and thereby increases the rotational frequency of the electric oil pump when the control mode of the vehicle drive system is set to the first control mode and the start of the internal combustion engine is predicted, sets the target rotational frequency of the electric oil pump in a period until complete ignition of the internal combustion engine is detected from the increase in the rotational frequency of the electric oil pump to a specified third target rotational frequency, and sets the target rotational frequency of the electric oil pump in a specified period after the complete ignition of the internal combustion engine is detected to a fourth target rotational frequency that is lower than the second target rotational frequency.

As it has been described so far, according to the present invention, it is possible to promptly supply the hydraulic pressure to the hydraulic actuation section after the start of the internal combustion engine while reducing an electric power consumption amount by the electric oil pump in the motor drive control mode.

### BRIEF DESCRIPTION OF THE DRAWINGS

Fig. 1 is a schematic view illustrating an example of a vehicle drive system to which a vehicle controller according to an embodiment of the present invention can be applied.
Fig. 2 is a block diagram illustrating a functional configuration of the vehicle controller according to the embodiment.
Fig. 3 is a flowchart illustrating control mode setting processing by the vehicle controller according to the embodiment.
Fig. 4 is a flowchart illustrating electric oil pump control processing by the vehicle controller according to the embodiment.
Fig. 5 is a flowchart illustrating start prediction processing for an internal combustion engine by the vehicle controller according to the embodiment.
Fig. 6 is a chart for explaining an application example of the vehicle controller according to the embodiment.
Fig. 7 is a schematic view illustrating an example of another vehicle drive system to which the vehicle controller according to the embodiment can be applied.
Fig. 8 is a schematic view illustrating an example of further another vehicle drive system to which the vehicle controller according to the embodiment can be applied.

### DETAILED DESCRIPTION OF THE INVENTION

A detailed description will be made on a preferred embodiment of the present invention with reference to the accompanying drawings. In the present specification and the drawings, components having substantially the same functional configuration will be denoted by the same reference sign, and a description thereon will not be repeated.

### <1. Configuration Example of Vehicle Drive System>

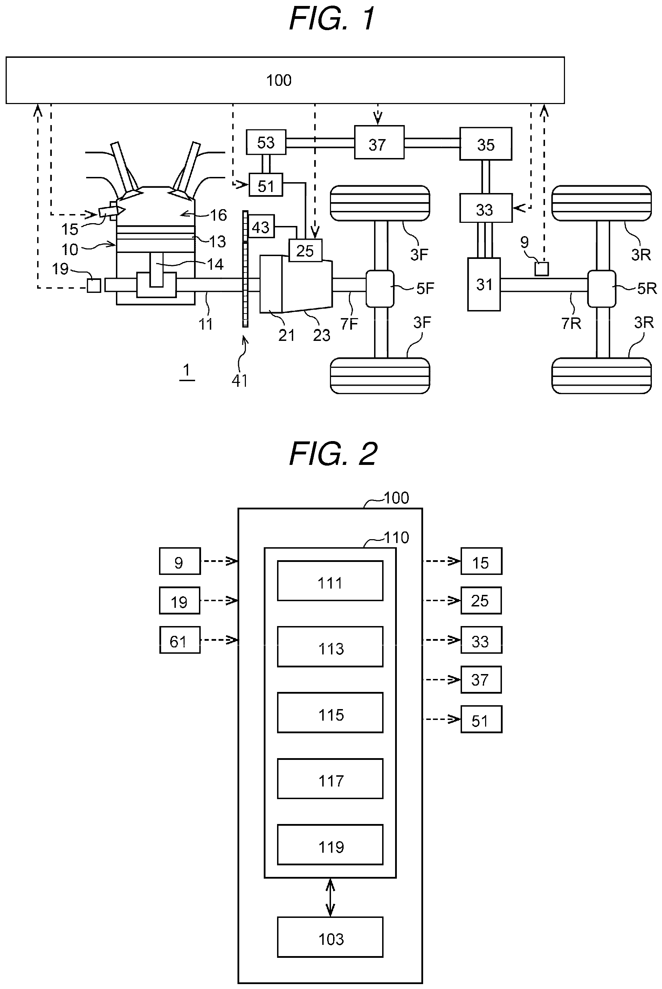

First, a description will be made on a configuration example of a vehicle drive system to which a vehicle controller according to the embodiment of the present invention can be applied. Fig. 1 is a schematic view illustrating a configuration of a vehicle drive system 1 according to this embodiment. The vehicle drive system 1 illustrated in Fig. 1 is configured as a hybrid vehicle drive system in which front wheels 3F are driven by drive torque output from an internal combustion engine 10 and rear wheels 3R are driven by drive torque output from a drive motor 31.

In the following embodiment, a description will be made on, as an example, the vehicle drive system in which the front wheels 3F are driven by the internal combustion engine 10 and the rear wheels 3R are driven by the drive motor 31. However, in the vehicle drive system, the front wheels 3F may be driven by the drive motor 31, and the rear wheels 3R may be driven by the internal combustion engine 10.

The vehicle drive system 1 includes, as a drive system for the front wheels 3F, the internal combustion engine 10, a torque converter 21, and an automatic transmission 23. The internal combustion engine 10 may be a gasoline engine that is driven by using gasoline fuel or may be a diesel engine that is driven by using diesel fuel. The internal combustion engine 10 includes a fuel injector 15 that is driven and controlled by a vehicle controller 100. The fuel injector 15 injects the fuel into a cylinder 16 of the internal combustion engine 10. However, the internal combustion engine 10 may be an internal combustion engine of a so-called port injection type that injects the fuel into an intake passage.

The internal combustion engine 10 includes a piston 13 which is provided to be able to reciprocate in the cylinder 16. The piston 13 is connected to a crankshaft 11 as an output shaft via a connecting rod 14. When air-fuel mixture burns, the piston 13 reciprocates in the cylinder 16 and causes the crankshaft 11 to rotate. The internal combustion engine 10 includes a crank angle sensor 19 that detects a rotation angle of the crankshaft 11. A sensor signal of the crank angle sensor 19 is sent to the vehicle controller 100.

The crankshaft 11 is connected to the automatic transmission 23 via the torque converter 21. The torque converter 21 is a fluid-type clutch that is provided to a power transmission path from the internal combustion engine 10 to the front wheels 3F and transmits rotation of the crankshaft 11 to an input shaft of the automatic transmission 23 via hydraulic oil.

The automatic transmission 23 includes a transmission mechanism such as a continuously variable transmission (CVT) or a stepped transmission. The automatic transmission 23 can adjust a gear ratio by controlling a hydraulic pressure that is supplied to plural hydraulic actuation sections. The automatic transmission 23 includes a valve unit 25. The valve unit 25 includes plural solenoid control valves that are driven and controlled by the vehicle controller 100 to adjust the hydraulic pressure to be supplied to the respective hydraulic actuation sections. In this embodiment, the valve unit 25 corresponds to the hydraulic pressure control unit. The automatic transmission 23 shifts a rotational frequency of rotational torque, which is input via the torque converter 21, at a set gear ratio, and then outputs the rotational torque to a front-wheel driveshaft 7F. The rotational torque output to the front-wheel driveshaft 7F is transmitted to the right and left front wheels 3F via a front-wheel differential mechanism 5F.

A mechanical oil pump 43 is connected to the crankshaft 11 via a gear mechanism 41. The mechanical oil pump 43 is a gear pump that suctions and discharges the hydraulic oil from an oil tank, which is not illustrated, by rotation of gears, and is driven by power of the internal combustion engine 10. The hydraulic oil discharged by the mechanical oil pump 43 is supplied to the valve unit 25.

In addition to the mechanical oil pump 43, the vehicle drive system 1 includes an electric oil pump 51 that supplies the hydraulic oil to the valve unit 25. The electric oil pump 51 is a motor pump that is driven by an electric motor to suction and discharge the hydraulic oil from the oil tank. The vehicle controller 100 controls driving of the electric oil pump 51. As the electric oil pump 51, an electric diaphragm pump, an electric gear pump, or the like is used, for example. However, the electric oil pump 51 is not limited thereto.

The vehicle controller 100 controls electric power that is supplied from a first battery 53 to the electric oil pump 51. For example, in the case where the electric motor that drives the electric oil pump 51 is a DC motor, the vehicle controller 100 controls a value of a current supplied to the electric motor and thereby controls a discharge amount of the hydraulic oil by the electric oil pump 51. The first battery 53 is an electrical storage device that stores the electric power to be supplied to an electrical appliance mounted to the vehicle. For example, a lead battery with a rated voltage of 12 V is used as the first battery 53. However, a type of the first battery 53 is not particularly limited.

In addition, the vehicle drive system 1 includes the drive motor 31 as a drive system for the rear wheels 3R. The drive motor 31 is a three-phase AC motor, for example, and has: a function of generating and outputting drive torque to a rear-wheel driveshaft 7R when being supplied with the electric power; and a function of generating regenerative electric power by using rotational torque of the rear wheels 3R. The drive torque output to the rear-wheel driveshaft 7R is transmitted to the right and left rear wheels 3R via a rear-wheel differential mechanism 5R. The rear-wheel driveshaft 7R is provided with a rotation sensor 9 that detects a rotational frequency of the rear-wheel driveshaft 7R. A sensor signal of the rotation sensor 9 is sent to the vehicle controller 100 and used to calculate a vehicle speed. The rotation sensor 9 only needs to detect the rotational frequency of any rotational shaft that rotates with the rotation of the front wheel 3F or the rear wheel 3R, and thus is not limited to the sensor that detects the rotational frequency of the rear-wheel driveshaft 7R.

An inverter unit 33 controls operation of the drive motor 31. When acceleration of the vehicle is requested, the inverter unit 33 converts DC power supplied from a second battery 35 into AC power, and supplies the AC power to the drive motor 31. As a result, the drive torque is supplied from the drive motor 31 to the rear wheels 3R, and the vehicle thereby accelerates. Meanwhile, when deceleration of the vehicle is requested, the inverter unit 33 converts the AC power regenerated by the drive motor 31 into the DC power, and supplies the DC power to the second battery 35. As a result, regenerative brake torque is supplied from the drive motor 31 to the rear wheels 3R, and the vehicle thereby decelerates. The inverter unit 33 may include a circuit that steps up or steps down the voltage of the electric power.

The second battery 35 is an electrical storage device that stores the electric power to be supplied to the drive motor 31. For example, a lithium-ion battery with a higher rated voltage, such as 48 V or 200V, than the rated voltage of the first battery 53 is used as the second battery 35. However, a type of the second battery 35 is not particularly limited.

The first battery 53 and the second battery 35 are electrically connected via a converter unit 37 that includes a boost circuit or a buck circuit. The converter unit 37 is driven by the vehicle controller 100, steps up the voltage of the electric power stored in the first battery 53, and then stores the electric power in the second battery 35. Alternatively, the converter unit 37 steps down the voltage of the electric power stored in the second battery 35, and then stores the electric power in the first battery 53. The converter unit 37 may have both of a step-up function and a step-down function.

### <2. Vehicle Controller>

A specific description will hereinafter be made on the vehicle controller 100 according to this embodiment.

The vehicle controller 100 has: a function of controlling driving of the vehicle drive system 1 while switching a drive control mode of the vehicle drive system 1; and a function of controlling driving of the electric oil pump 51. In this embodiment, the vehicle controller 100 is configured to start driving the electric oil pump 51 when a start of the internal combustion engine 10 is predicted and to stop driving the electric oil pump 51 after the start of the internal combustion engine 10. This reduces electric power consumption by the electric oil pump 51 in a motor drive control mode.

### (2-1. Configuration Example)

Fig. 2 is a block diagram illustrating a configuration example of the vehicle controller 100.

The vehicle controller 100 is configured to include at least one processor 110 such as a central processing unit (CPU) and at least one memory 103 communicably connected to the processor 110. The vehicle controller 100 may include plural vehicle controllers that are connected in a mutually communicable manner via a communication bus such as a controller area network (CAN). For example, the vehicle controller 100 may be configured that an engine vehicle controller controlling the internal combustion engine 10, an inverter vehicle controller controlling the inverter unit 33 and the converter unit 37, and a transmission vehicle controller controlling the automatic transmission 23 are connected in the mutually communicable manner. The vehicle controller 100 may partially or entirely be constructed of a member whose firmware or the like can be updated, or may partially or entirely be a program module or the like that is executed by a command from the CPU or the like.

The memory 103 stores computer programs executed by the processor 110 and information such as parameters, detection data, and calculation results used for various calculations. The at least one memory 103 may include a storage element such as random access memory (RAM) or read only memory (ROM) and a storage device such as a hard disk drive (HDD), a solid state drive (SSD), a CD-ROM, or a storage.

The vehicle controller 100 is configured to be able to acquire the sensor signals sent from the rotation sensor 9, the crank angle sensor 19, and an accelerator pedal position sensor 61. The accelerator pedal position sensor 61 is a sensor that detects an operation amount of an accelerator pedal operated by a driver. In addition, the vehicle controller 100 is configured to be able to output a drive signal to the fuel injector 15, the valve unit 25, the inverter unit 33, the converter unit 37, and the electric oil pump 51.

### (2-2. Functional Configuration)

Fig. 2 illustrates, of the configuration of the vehicle controller 100, a functional configuration that is related to the function of controlling driving of the electric oil pump 51.

The processor 110 includes a control mode setting section 111, an engine control section 113, an inverter control section 115, a transmission control section 117, and a pump control section 119. Each of these sections is a function that is implemented when the processor 110 executes the computer program. Here, at least one of the control mode setting section 111, the engine control section 113, the inverter control section 115, the transmission control section 117, and the pump control section 119 may be constructed of hardware.

The control mode setting section 111 sets a control mode of the vehicle drive system 1. In this embodiment, the control mode setting section 111 sets the control mode to one of the motor drive control mode, a hybrid drive control mode, a hybrid drive transition mode, and a motor drive transition mode. The motor drive control mode is a control mode in which travel of the vehicle is controlled by the drive torque transmitted from the drive motor 31 to the rear wheels 3R. In the motor drive control mode, the vehicle becomes a two-wheeled vehicle in which the drive torque is transmitted only to the rear wheels 3R. The hybrid drive control mode is a control mode in which the travel of the vehicle is controlled by the drive torque transmitted from the internal combustion engine 10 to the front wheels 3F and the drive torque transmitted from the drive motor 31 to the rear wheels 3R. In the hybrid drive control mode, the vehicle becomes a four-wheeled vehicle in which the drive torque is transmitted to the front wheels 3F and the rear wheels 3R.

The hybrid drive transition mode is a control mode in which the control mode transitions from the motor drive control mode to the hybrid drive control mode. In the hybrid drive transition mode, of the drive torque requested for the entire vehicle (hereinafter also referred to as "requested drive torque"), a ratio of the drive torque transmitted from the internal combustion engine 10 to the front wheels 3F is gradually increased while a ratio of the drive torque transmitted from the drive motor 31 to the rear wheels 3R is gradually reduced. The motor drive transition mode is a control mode in which the control mode transitions from the hybrid drive control mode to the motor drive control mode. In the motor drive transition mode, of the drive torque requested for the entire vehicle, the ratio of the drive torque transmitted from the internal combustion engine 10 to the front wheels 3F is gradually reduced while the ratio of the drive torque transmitted from the drive motor 31 to the rear wheels 3R is gradually increased.

In the vehicle drive system 1 according to this embodiment, the motor drive control mode is set in a period when the drive torque requested for the entire vehicle is lower than a specified value, and the hybrid drive control mode is set in a period when the requested drive torque for the vehicle is higher than the specified value. That is, the drive torque output from the internal combustion engine 10 is torque that compensates for deficiency in the drive torque when the drive torque output from the drive motor 31 is insufficient for the requested drive torque. For example, the control mode setting section 111 sets the control mode to the motor drive control mode or the hybrid drive control mode on the basis of the requested drive torque for the vehicle. The requested drive torque for the vehicle can be acquired on the basis of the operation amount of the accelerator pedal and an increase rate of the operation amount of the accelerator pedal, which are calculated on the basis of the sensor signal from the accelerator pedal position sensor 61, and the vehicle speed, which is calculated on the basis of the sensor signal from the rotation sensor 9.

Here, the motor drive control mode corresponds to the first control mode in which the internal combustion engine 10 is brought into a stopped state and the vehicle travels only by the drive torque output from the drive motor 31. The hybrid drive control mode corresponds to the second control mode in which the internal combustion engine 10 is brought into an operation state and the vehicle travels at least by the drive torque output from the internal combustion engine 10.

The engine control section 113 primarily controls driving of the internal combustion engine 10. More specifically, the engine control section 113 controls driving of the fuel injector 15 and thereby controls fuel injection into the cylinder 16 of the internal combustion engine 10. In addition to the above, the engine control section 113 controls driving of an intake throttle device, which is not illustrated, and thereby controls an intake air amount introduced into the cylinder 16. In the case where the internal combustion engine 10 is an ignition engine such as the gasoline engine, the engine control section 113 controls driving of an ignition plug and thereby controls ignition of the air-fuel mixture produced in the cylinder 16.

The inverter control section 115 controls driving of the inverter unit 33. More specifically, the inverter control section 115 drives plural switching elements provided to the inverter unit 33, converts the DC power, which is output from the second battery 35, into the AC power, supplies the AC power to the drive motor 31, and rotationally drives the drive motor 31. In this way, the drive torque to be transmitted to the rear wheels 3R is output. In addition, when the vehicle decelerates, the inverter control section 115 drives the inverter unit 33, causes the drive motor 31 to regenerates the electric power, converts the generated AC power into the DC power, and stores the DC power in the second battery 35.

The transmission control section 117 controls driving of the plural solenoid control valves provided to the valve unit 25, and controls the hydraulic pressure supplied to each of the hydraulic actuation sections in the automatic transmission 23. In this way, the gear ratio of the automatic transmission 23 is adjusted.

The pump control section 119 controls driving of the electric oil pump 51. More specifically, the pump control section 119 sets a target rotational frequency of the electric oil pump 51 and, based on the set target rotational frequency, controls the value of the current supplied from the first battery 53 to the electric oil pump 51. In this way, the pump control section 119 controls the discharge amount of the hydraulic oil by the electric oil pump 51. For example, the pump control section 119 may execute feedback control on the value of the current supplied to the electric oil pump 51 on the basis of a difference between the rotational frequency and the target rotational frequency of the electric oil pump 51. The rotational frequency of the electric oil pump 51 is detected by a rotation sensor such as an encoder provided to the electric oil pump 51.

### (2-3. Operation of Vehicle Controller)

Next, a detailed description will be made on operation of processing to set the control mode (control mode setting processing) and processing to control driving of the electric oil pump 51 (electric oil pump control processing), and both types of the processing are executed by the vehicle controller 100.

### (Control Mode Setting Processing)

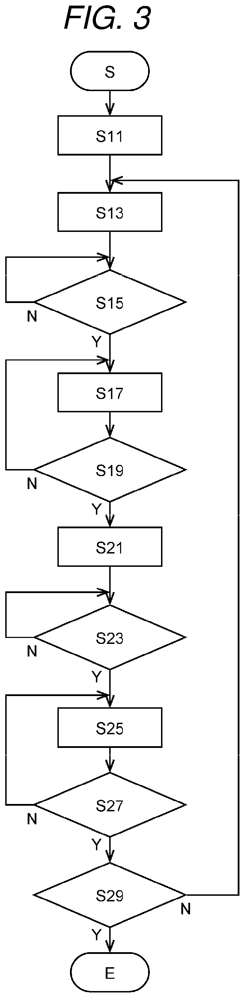

Fig. 3 is a flowchart illustrating operation of processing to set the control mode of the vehicle drive system 1.

First, when the vehicle drive system 1 is activated (step S11), the control mode setting section 111 in the vehicle controller 100 sets the control mode to the motor drive control mode (Step S13). In the motor drive control mode, the requested drive torque is set as target drive torque output from the drive motor 31, and the inverter control section 115 controls driving the inverter unit 33. In this way, the drive torque to be transmitted from the drive motor 31 to the rear wheels 3R is output.

Next, the control mode setting section 111 determines whether the requested drive torque for the vehicle is equal to or higher than a specified first torque threshold value, which is set in advance (step S15). The first torque threshold value is set to an appropriate value that is lower than rated output torque of the drive motor 31, for example, and is set such that the drive torque output by the drive motor 31 does not exceed the rated output.

If the requested drive torque is lower than the first torque threshold value (S15/No), the control mode setting section 111 maintains the control mode to the motor drive control mode and repeatedly makes the determination in step S15. On the other hand, if the requested drive torque is equal to or higher than the first torque threshold value (S15/Yes), the control mode setting section 111 sets the control mode to the hybrid drive transition mode (step S17). In the hybrid drive transition mode, the engine control section 113 executes control to start the internal combustion engine 10. More specifically, the engine control section 113 drives a cranking motor, which is not illustrated, to crank the internal combustion engine 10, injects the fuel from the fuel injector 15, and causes the air-fuel mixture to burn in the cylinder 16.

Next, the control mode setting section 111 determines whether a combustion state of the internal combustion engine 10 has become a complete state (hereinafter also referred to as a "complete ignition state") (step S19). For example, the control mode setting section 111 determines that the internal combustion engine 10 is brought into the complete ignition state when a rotational frequency of the crankshaft 11 is brought into a stable state at a specified determination threshold value or higher on the basis of the sensor signal from the crank angle sensor 19. A method for determining whether the internal combustion engine is brought into the complete ignition state is not particularly limited. If it is not determined that the internal combustion engine 10 is brought into the complete ignition state (S19/No), the control mode setting section 111 repeatedly makes the determination in step S19 on the basis of the sensor signal from the crank angle sensor 19.

On the other hand, if it is determined that the internal combustion engine 10 is brought into the complete ignition state (S19/Yes), the control mode setting section 111 sets the control mode to the hybrid drive control mode (step S21). In the hybrid drive control mode, the engine control section 113 gradually increases the drive torque that is output from the internal combustion engine 10 and transmitted to the front wheels 3F via the torque converter 21 and the automatic transmission 23. Meanwhile, the inverter control section 115 gradually reduces the target drive torque output from the drive motor 31. For example, the inverter control section 115 sets the target drive torque for the drive motor 31 to the rated output torque and controls the drive motor 31. Meanwhile, the engine control section 113 sets, as the target drive torque for the internal combustion engine 10, differential torque that is acquired by subtracting the rated output torque of the drive motor 31 from the requested drive torque, and then controls the internal combustion engine 10. However, a ratio of the target drive torque may appropriately be set according to the vehicle travel control.

Next, the control mode setting section 111 determines whether the requested drive torque is lower than a specified second torque threshold value, which is set in advance (step S23). The second torque threshold value may be the same value as the first torque threshold value used in step S15. However, in order to avoid repetition of a state where the requested drive torque is equal to or higher than the first torque threshold value or is lower than the second torque threshold value, the second torque threshold value is preferably a lower value than the first torque threshold value used in step S15. If the requested drive torque is equal to or higher than the second torque threshold value (S23/No), the control mode setting section 111 maintains the control mode to the hybrid drive control mode and repeatedly makes the determination in step S23.

On the other hand, if the requested drive torque is lower than the second torque threshold value (S23/Yes), the control mode setting section 111 sets the control mode to the motor drive transition mode (step S25). In the motor drive transition mode, the engine control section 113 stops the operation of the internal combustion engine 10. More specifically, the engine control section 113 stops the fuel injection from the fuel injector 15.

Next, the control mode setting section 111 determines whether the internal combustion engine 10 has been stopped (step S27). For example, the control mode setting section 111 determines that the internal combustion engine 10 has been stopped when the rotational frequency of the crankshaft 11 becomes zero on the basis of the sensor signal from the crank angle sensor 19. A method for determining whether the internal combustion engine 10 has been stopped is not particularly limited. If it is not determined that the internal combustion engine 10 has been stopped (S27/No), the control mode setting section 111 repeatedly makes the determination in step S27 on the basis of the sensor signal from the crank angle sensor 19.

On the other hand, if it is determined that the internal combustion engine 10 has been stopped (S27/Yes), the control mode setting section 111 determines whether the vehicle drive system 1 has been stopped (step S29). If it is not determined that the vehicle drive system 1 has been stopped (S29/No), the processing returns to step S13, and the control mode setting section 111 sets the control mode to the motor drive control mode and executes the processing in each of the above-described steps again. On the other hand, if it is determined that the vehicle drive system 1 has been stopped (S29/Yes), the control mode setting section 111 terminates the control mode setting processing.

### (Electric Oil Pump Control Processing)

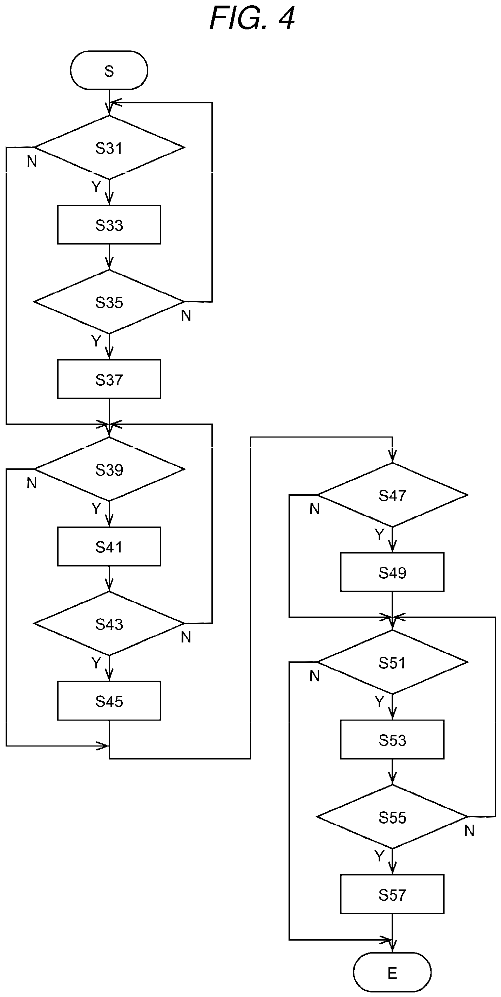

Fig. 4 is a flowchart illustrating operation of processing to control driving of the electric oil pump 51.

First, the pump control section 119 in the vehicle controller 100 determines whether the currently-set control mode is the motor drive control mode (Step S31). If the control mode is not the motor drive control mode (S31/No), the processing proceeds to step S39. On the other hand, if the control mode is the motor drive control mode (S31/Yes), the pump control section 119 sets the target rotational frequency of the electric oil pump 51 to a first target rotational frequency, which is set in advance (step S33). The first target rotational frequency is the target rotational frequency of the electric oil pump 51 that is set in a state where the control mode is set to the motor drive control mode and the start of the internal combustion engine 10 is not predicted. In the vehicle drive system 1 according to this embodiment, the automatic transmission 23 does not operate in the motor drive control mode. Thus, the first target rotational frequency is set to zero, and the pump control section 119 stops driving of the electric oil pump 51.

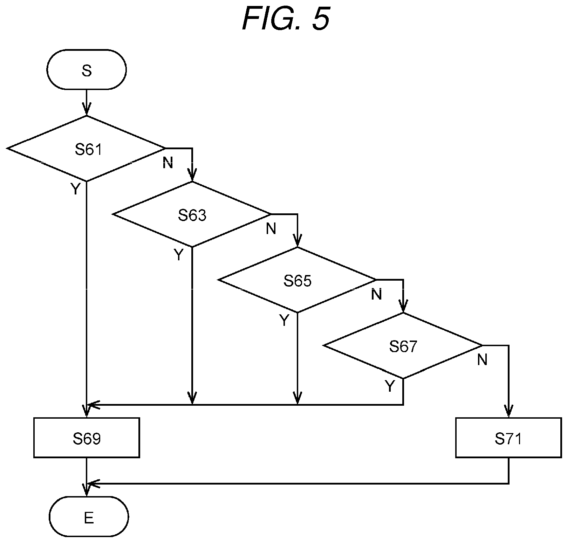

Next, the pump control section 119 determines whether the start of the internal combustion engine 10 is predicted (step S35). Here, prior to the start of the internal combustion engine 10 by the engine control section 113, the pump control section 119 predicts whether the vehicle is in such a travel state that the internal combustion engine 10 is started. Fig. 5 is a flowchart illustrating operation of processing executed by the pump control section 119 to predict the start of the internal combustion engine 10 in this embodiment.

The pump control section 119 determines whether the increase rate of the operation amount of the accelerator pedal by the driver is equal to or higher than a specified first threshold value (step S61). The first threshold value is adjusted in advance so as to be able to determine that there is a high possibility of the requested drive torque for the vehicle, which is calculated on the basis of the operation amount of the accelerator pedal, the increase rate of the operation amount of the accelerator pedal, and the vehicle speed, exceeding the rated output of the drive motor 31. If the increase rate of the operation amount of the accelerator pedal is equal to or higher than the specified first threshold value (S61/Yes), the pump control section 119 determines that the start of the internal combustion engine 10 is predicted (Step S69).

On the other hand, if the increase rate of the operation amount of the accelerator pedal is lower than the specified first threshold value (S61/No), the pump control section 119 determines whether the drive torque output from the drive motor 31 is equal to or higher than a specified second threshold value (Step S63). The second threshold value is a lower value than the first torque threshold value used in the processing in step S15 of the control mode setting processing, and is adjusted in advance so as to be able to determine that there is a high possibility of the requested drive torque exceeding the first torque threshold value after a brief time period. The drive torque output from the drive motor 31 may be a value of the target drive torque for the drive motor 31, which is used by the inverter control section 115, or may be a value calculated on the basis of a control amount of the inverter control section 115. If the drive torque output from the drive motor 31 is equal to or higher than the specified second threshold value (S63/Yes), the pump control section 119 determines that the start of the internal combustion engine 10 is predicted (Step S69).

On the other hand, if the drive torque output from the drive motor 31 is lower than the specified second threshold value (S63/No), the pump control section 119 determines whether an increase rate of the drive torque output from the drive motor 31 is equal to or higher than a specified third threshold value (Step S65). The third threshold value is adjusted in advance so as to be able to determine that there is a high possibility of the drive torque, which is output from the drive motor 31, exceeding the rated output torque of the drive motor 31. Here, only one of the determination processing in step S63 and the determination processing in step S65 may be executed. If the increase rate of the drive torque output from the drive motor 31 is equal to or higher than the specified third threshold value (S65/Yes), the pump control section 119 determines that the start of the internal combustion engine 10 is predicted (Step S69).

On the other hand, if the increase rate of the drive torque output from the drive motor 31 is lower than the specified third threshold value (S65/No), the pump control section 119 determines whether the vehicle speed is equal to or higher than a specified fourth threshold value (Step S67). The fourth threshold value is adjusted in advance so as to be able to determine that there is the high possibility of the requested drive torque for the vehicle, which is calculated on the basis of the operation amount of the accelerator pedal, the increase rate of the operation amount of the accelerator pedal, and the vehicle speed, exceeding the rated output of the drive motor 31. If the vehicle speed is equal to or higher than the specified fourth threshold value (S67/Yes), the pump control section 119 determines that the start of the internal combustion engine 10 is predicted (Step S69). On the other hand, if the vehicle speed is lower than the specified fourth threshold value (S67/Yes), the pump control section 119 determines that the start of the internal combustion engine 10 is not predicted (Step S71).

Referring back to Fig. 4, in step S35, if the pump control section 119 does not determine that the vehicle is in such a travel state that the internal combustion engine 10 is started (S35/No), the processing returns to step S31, and the processing in each of above-described steps is executed again. On the other hand, if determining that the vehicle is in such a travel state that the internal combustion engine 10 is started (S35/Yes), the pump control section 119 sets the target rotational frequency of the electric oil pump 51 to a second target rotational frequency, which is set in advance, and controls the supply current to the electric oil pump 51 (step S37). The second target rotational frequency is the target rotational frequency of the electric oil pump 51 that is set while the vehicle is determined to be in such a travel state that the internal combustion engine 10 is started and while the control mode is set in the motor drive control mode. The second target rotational frequency is adjusted to the high rotational frequency so that, when start operation of the internal combustion engine 10 is initiated, the sufficient hydraulic pressure is promptly supplied to the hydraulic actuation sections in the automatic transmission 23 via the valve unit 25.

Next, the pump control section 119 determines whether the control mode of the vehicle drive system 1 is set to the hybrid drive transition mode (Step S39). Here, after the start of the internal combustion engine 10 is predicted, it is determined whether the start operation of the internal combustion engine 10 has actually been initiated. If the control mode is not set to the hybrid drive transition mode (S39/No), the processing proceeds to processing in step S47. On the other hand, if the control mode is set to the hybrid drive transition mode (S39/Yes), the pump control section 119 sets the target rotational frequency of the electric oil pump 51 to a third target rotational frequency, which is set in advance, and controls the supply current to the electric oil pump 51 (step S41). The third target rotational frequency is the target rotational frequency of the electric oil pump 51 that is set in a state where the start operation of the internal combustion engine 10 is initiated and before the internal combustion engine 10 is brought into the complete ignition state. In the state before the internal combustion engine 10 is brought into the complete ignition state, the supply of the hydraulic pressure by the mechanical oil pump 43 remains insufficient. Thus, the third target rotational frequency is maintained to the high rotational frequency. The third target rotational frequency may be the same value as the second target rotational frequency, or may be a lower value than the second target rotational frequency.

Next, the pump control section 119 determines whether the internal combustion engine 10 has been brought into the complete ignition state (step S43). For example, the pump control section 119 determines that the internal combustion engine 10 has been brought into the complete ignition state when the rotational frequency of the crankshaft 11 is brought into the stable state at the specified determination threshold value or higher on the basis of the sensor signal from the crank angle sensor 19. If the pump control section 119 does not determine that the internal combustion engine 10 has been brought into the complete ignition state (S43/no), the processing returns to step S39. On the other hand, if determining that the internal combustion engine 10 has been brought into the complete ignition state (S43/Yes), the pump control section 119 sets the target rotational frequency of the electric oil pump 51 to a fourth target rotational frequency and controls the supply current to the electric oil pump 51 (step S45). The fourth target rotational frequency is the target rotational frequency of the electric oil pump 51 that is set after the control mode is set to the hybrid drive transition mode and the internal combustion engine 10 is brought into the complete ignition state. In a state after the internal combustion engine 10 is brought into the complete ignition state, the fourth target rotational frequency is set to a relatively low value for a purpose of assisting with supply of the hydraulic pressure to the hydraulic actuation section although the supply of the hydraulic pressure by the mechanical oil pump 43 is secured. The fourth target rotational frequency is adjusted to a lower value than the third target rotational frequency in advance.

Next, the pump control section 119 determines whether the control mode of the vehicle drive system 1 is set to the hybrid drive control mode (step S47). If the control mode is not set to the hybrid drive control mode (S47/No), the processing proceeds to that in step S51. On the other hand, if the control mode is set to the hybrid drive control mode (S47/Yes), the pump control section 119 sets the target rotational frequency of the electric oil pump 51 to a fifth target rotational frequency (= zero) (step S49). That is, in the state where the control mode of the vehicle drive system 1 is switched to the hybrid drive control mode, the supply of the hydraulic pressure by the mechanical oil pump 43 is sufficiently secured. Thus, the electric oil pump 51 stops driving.

Next, the pump control section 119 determines whether the control mode of the vehicle drive system 1 is set to the motor drive transition mode (Step S51). If the control mode is not set to the motor drive transition mode (S51/No), the pump control section 119 terminates this routine, and the processing returns to Start (S). On the other hand, if the control mode is set to the motor drive transition mode (S51/Yes), the pump control section 119 sets the target rotational frequency of the electric oil pump 51 to a sixth target rotational frequency and controls the supply current to the electric oil pump 51 (step S53). The sixth target rotational frequency is the target rotational frequency of the electric oil pump 51 that is set in a state where the control mode is set to the motor drive transition mode and the start of the internal combustion engine 10 is not predicted. In the vehicle drive system 1 according to this embodiment, the automatic transmission 23 does not operate when the control mode transitions from the motor drive transition mode to the motor drive control mode. Thus, the sixth target rotational frequency is set to zero, and the pump control section 119 keeps stopping driving of the electric oil pump 51.

Next, the pump control section 119 determines whether the vehicle is in such a travel state that the internal combustion engine 10 is started (step S55). In the motor drive transition mode, such operation is performed to stop the fuel injection of the internal combustion engine 10 and thereby stop the internal combustion engine 10. Meanwhile, there is a possibility that the internal combustion engine 10 is restarted when the driver depresses the accelerator pedal again, or the like. Thus, the pump control section 119 monitors whether the vehicle is in such a travel state that the internal combustion engine 10 is restarted. A specific determination method may be the same as that in the processing in the flowchart illustrated in Fig. 5.

If the pump control section 119 does not determine that the vehicle is in such a travel state that the internal combustion engine 10 is started (S55/No), the processing returns to step S51, and the above-described processing is executed again. On the other hand, if determining that the vehicle is in such a travel state that the internal combustion engine 10 is started (S55/Yes), the pump control section 119 sets the target rotational frequency of the electric oil pump 51 to the second target rotational frequency, and controls the supply current to the electric oil pump 51 (step S57). In this embodiment, in the case where the vehicle is determined to be in such a travel state that the internal combustion engine 10 is started, the target rotational frequency of the electric oil pump 51 is set to the second target rotational frequency while the control mode is once set to the motor drive control mode.

During the activation of the vehicle drive system 1, the vehicle controller 100 repeatedly executes the processing in above-described step S31 to step S57. In this way, the vehicle controller 100 sets the target rotational frequency according to the setting state of the control mode of the vehicle drive system 1 and the actuation state of the internal combustion engine 10, and then drives the electric oil pump 51.

### (2-4. Application Example)

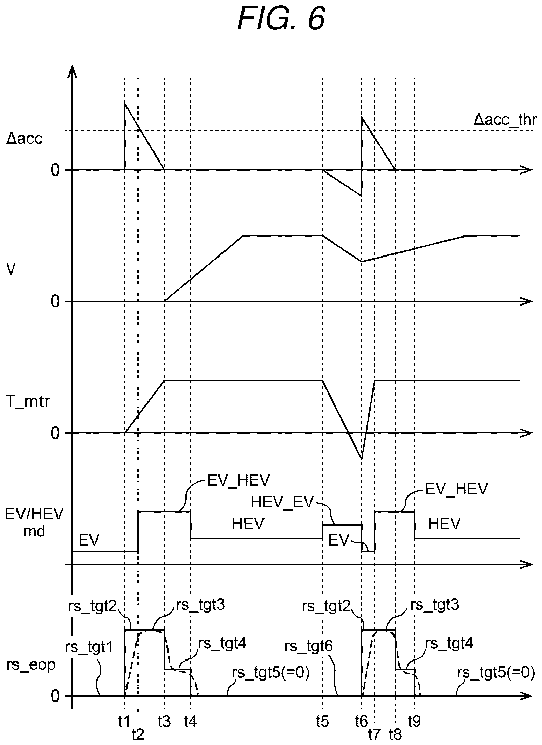

Next, a description will be made on a case example in which the vehicle controller 100 according to this embodiment is applied. Fig. 6 is an explanatory chart illustrating an application example of the vehicle controller 100. Fig. 6 illustrates changes in an increase rate Δacc of the operation amount of the accelerator pedal, a vehicle speed V, drive torque T_mtr output from the drive motor 31, a control mode md_EV/HEV, a rotational frequency rs_eop (a broken line) and a target rotational frequency rs_eop_tgt (a solid line) of the electric oil pump 51 at a start of the vehicle.

Immediately after the activation of the vehicle drive system 1, the control mode md_EV/HEV is set to a motor drive control mode EV. In this period, the target rotational frequency of the electric oil pump 51 is set to a first target rotational frequency rs_tgt1. In the vehicle drive system 1 according to this embodiment, the first target rotational frequency rs_tgt1 is set to zero, and driving of the electric oil pump 51 is stopped. When the driver further depresses the accelerator pedal at time t1, the drive torque T_mtr output from the drive motor 31 starts being increased. In addition, since the increase rate Δacc of the operation amount of the accelerator pedal exceeds a first threshold Δacc_thr, the vehicle is determined to be in such a travel state that the internal combustion engine 10 is started, the target rotational frequency of the electric oil pump 51 is set to a second target rotational frequency rs_tgt2, and the rotational frequency of the electric oil pump 51 starts being increased.

At time t2, the control mode md_EV/HEV is set to a hybrid drive transition mode EV_HEV. As a result, the start operation of the internal combustion engine 10 is initiated, and the target rotational frequency of the electric oil pump 51 is set to a third target rotational frequency rs_tgt3. In the example illustrated in Fig. 6, the third target rotational frequency rs_tgt3 is set to the same value as the second target rotational frequency rs_tgt2. Then, at time t3, the operation amount of the accelerator pedal is maintained to be constant (Δacc = 0), and the vehicle speed V starts being increased. In addition, since the internal combustion engine 10 is brought into the complete ignition state, the drive torque T_mtr output from the drive motor 31 is maintained at the rated output torque, for example. Furthermore, since the supply of the hydraulic pressure starts being stabilized by the mechanical oil pump 43, which is driven by the power of the internal combustion engine 10, the target rotational frequency of the electric oil pump 51 is set to a fourth target rotational frequency rs_tgt4 that is lower than the second target rotational frequency rs_tgt2.

Next, at time t4, since the sufficient hydraulic pressure is secured by the mechanical oil pump 43, which is driven by the power of the internal combustion engine 10, at the time when the control mode is set to a hybrid drive control mode HEV, the target rotational frequency of the electric oil pump 51 is set to a fifth target rotational frequency rs_tgt5 (= zero), and the electric oil pump 51 stops driving.

Next, at time t5, when the driver starts releasing the accelerator pedal, the control mode is set to a motor drive transition mode HEV_EV, and stop operation of the internal combustion engine 10 is initiated. In conjunction therewith, the drive torque T_mtr, which is output from the drive motor 31, starts being reduced, and the vehicle speed V also starts being reduced. In addition, when the control mode md_EV/HEV is set to the motor drive transition mode HEV_EV, the target rotational frequency of the electric oil pump 51 is set to a sixth target rotational frequency rs_tgt6. In the example illustrated in Fig. 6, the sixth target rotational frequency rs_tgt6 is set to zero, and a stopped state of the electric oil pump 51 continues.

Thereafter, at time t6, in the case where it is assumed that the driver further depresses the accelerator pedal again while the drive motor 31 is regeneratively driven, the drive torque T_mtr is output after regenerative torque, which is generated by regenerative driving of the drive motor 31, is reduced. In conjunction therewith, the vehicle speed V starts being increased. In addition, since the increase rate Δacc of the operation amount of the accelerator pedal exceeds the first threshold Δacc_thr, the vehicle is determined to be in such a travel state that the internal combustion engine 10 is started. Then, the control mode md_EV/HEV is set to the motor drive control mode EV, the target rotational frequency of the electric oil pump 51 is set to the second target rotational frequency rs_tgt2, and the rotational frequency of the electric oil pump 51 starts being increased.

Next, at time t7, the control mode md_EV/HEV is set to the hybrid drive transition mode EV_HEV. As a result, the start operation of the internal combustion engine 10 is initiated, and the target rotational frequency of the electric oil pump 51 is set to the third target rotational frequency rs_tgt3.

Next, at time t8, the operation amount of the accelerator pedal is maintained to be constant (Δacc = 0). In addition, since the internal combustion engine 10 is brought into the complete ignition state, the drive torque T_mtr output from the drive motor 31 is maintained at the rated output torque, for example. Furthermore, since the supply of the hydraulic pressure starts being stabilized by the mechanical oil pump 43, which is driven by the power of the internal combustion engine 10, the target rotational frequency of the electric oil pump 51 is set to the fourth target rotational frequency rs_tgt4 that is lower than the second target rotational frequency rs_tgt2.

Next, at time t9, since the sufficient hydraulic pressure is secured by the mechanical oil pump 43, which is driven by the power of the internal combustion engine 10, at the time when the control mode is set to the hybrid drive control mode HEV, the target rotational frequency of the electric oil pump 51 is set to the fifth target rotational frequency rs_tgt5 (= zero), and the electric oil pump 51 stops driving.

Just as described, according to the vehicle controller 100 in this embodiment, while the vehicle drive system 1 is controlled in the motor drive control mode EV, driving of the electric oil pump 51 is stopped. This reduces an electric power consumption amount by the electric oil pump 51. In addition, according to the vehicle controller 100 in this embodiment, in the case where the start of the internal combustion engine 10 is predicted while the vehicle drive system 1 is controlled in the motor drive control mode EV, the control mode md_EV/HEV is switched to the hybrid drive transition mode EV_HEV. In this way, the electric oil pump 51 is driven at the relatively high second target rotational frequency rs_tgt2 in advance before the start operation of the internal combustion engine 10 is initiated. As a result, the sufficient hydraulic pressure is supplied to the valve unit 25 while the control mode of the vehicle drive system 1 transitions from the motor drive control mode EV to the hybrid drive control mode HEV, and the hydraulic pressure can promptly be supplied to the hydraulic actuation sections in the automatic transmission 23 after the start of the internal combustion engine 10.

Moreover, according to the vehicle controller 100 in this embodiment, in the case where the start of the internal combustion engine 10 is predicted while the vehicle drive system 1 is controlled in the motor drive control mode EV, the electric oil pump 51 is driven at the relatively high second target rotational frequency rs_tgt2 until the internal combustion engine 10 is brought into the complete ignition state. Then, after the internal combustion engine 10 is brought into the complete ignition state, the electric oil pump 51 is driven at the fourth target rotational frequency rs_tgt4 that is lower than the second target rotational frequency rs_tgt2. In this way, in the case where the sufficient hydraulic pressure cannot be supplied by the mechanical oil pump 43, which is driven by the power of the internal combustion engine 10, the electric power consumption amount of the electric oil pump 51 can be reduced while the hydraulic pressure is supplemented.

### <3. Application Examples to Other Vehicle Drive Systems>

The description has been made so far on the vehicle controller 100 according to this embodiment. However, the vehicle drive system to which the vehicle controller 100 can be applied is not limited to the above-described vehicle drive system 1. A description will hereinafter be made on examples of other vehicle drive systems to which the vehicle controller 100 can be applied.

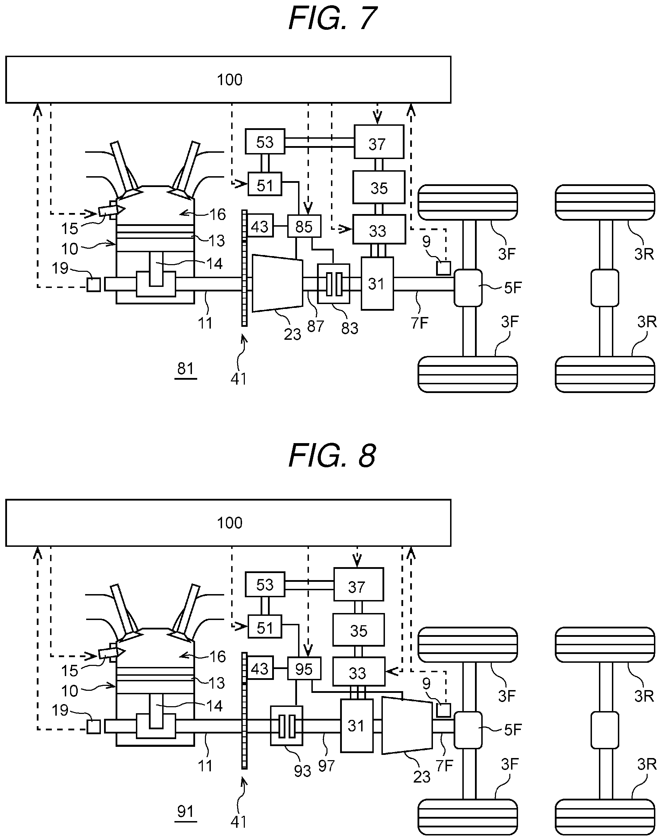

Fig. 7 and Fig. 8 are explanatory views each illustrating an example of the vehicle drive system to which the vehicle controller 100 according to this embodiment can be applied.

Fig. 7 illustrates a vehicle drive system 81 configured as a hybrid drive system in which the front wheels 3F are driven by the drive torque output from the internal combustion engine 10 and the drive torque output from the drive motor 31.

The vehicle drive system 81 includes, as the drive system for the front wheels 3F, the internal combustion engine 10, the automatic transmission 23, a hydraulic clutch 83, and the drive motor 31. The configuration of each of the internal combustion engine 10, the drive motor 31, and the automatic transmission 23 may be the same as that of respective one of the internal combustion engine 10, the drive motor 31, and the automatic transmission 23 provided to the vehicle drive system 1, which has been described in the above embodiment. In the vehicle drive system 81, the crankshaft 11 of the internal combustion engine 10 is connected to the automatic transmission 23. An output shaft 87 of the automatic transmission 23 is connected to the motor shaft (the front-wheel driveshaft) 7F of the drive motor 31 via the hydraulic clutch 83.

The hydraulic clutch 83 is one of the hydraulic actuation sections, is engaged when the hydraulic pressure is supplied thereto via a valve unit 85, and allows power transmission between the output shaft 87 of the automatic transmission 23 and the motor shaft 7F of the drive motor 31. Meanwhile, the hydraulic clutch 83 is disengaged when the supplied hydraulic pressure is reduced, and consequently disallows the power transmission between the output shaft 87 of the automatic transmission 23 and the motor shaft 7F of the drive motor 31. In an engaged state of the hydraulic clutch 83, the vehicle drive system 81 is controlled in the hybrid drive control mode in which the drive torque output from the internal combustion engine 10 and the drive torque output from the drive motor 31 are transmitted to the front wheels 3F via the front-wheel driveshaft 7F and the front-wheel differential mechanism 5F. Meanwhile, in a disengaged state of the hydraulic clutch 83, the vehicle drive system 81 is controlled in the motor drive control mode in which the drive torque output from the drive motor 31 is transmitted to the front wheels 3F via the front-wheel driveshaft 7F and the front-wheel differential mechanism 5F.

The valve unit 85 includes plural solenoid control valves that are driven and controlled by the vehicle controller 100 to adjust the hydraulic pressure to be supplied to the respective hydraulic actuation sections. In this embodiment, the valve unit 85 corresponds to the hydraulic pressure control unit, and adjusts the hydraulic pressure to be supplied to the hydraulic clutch 83 and each of the hydraulic actuation sections in the automatic transmission 23. In addition, the vehicle drive system 81 includes: the mechanical oil pump 43 that is connected to the crankshaft 11 via the gear mechanism 41 and is driven by the power of the internal combustion engine 10; and the electric oil pump 51 that is driven by the electric motor.

Of the configuration of the vehicle drive system 81, the configuration other than the points described above can be the same as that of the above-described vehicle drive system 1. Thus, a detailed description thereon will not be made. Similar to the vehicle drive system 1 according to the above-described embodiment, in the vehicle drive system 81, the supply of the hydraulic pressure to the hydraulic actuation sections is unnecessary in the motor drive control mode. Meanwhile, in the hybrid drive control mode, the hydraulic pressure is supplied to the hydraulic clutch 83 and the hydraulic actuation sections in the automatic transmission 23, and the drive torque to be transmitted to the front wheels 3F is controlled. Similarly, in the vehicle drive system 81 illustrated in Fig. 7, the vehicle controller 100 can execute the control mode setting processing and the electric oil pump control processing according to the flowcharts illustrated in Fig. 3 to Fig. 5.

Fig. 8 illustrates a vehicle drive system 91 configured as a hybrid drive system in which the front wheels 3F are driven by the drive torque output from the internal combustion engine 10 and the drive torque output from the drive motor 31.

The vehicle drive system 91 includes, as the drive system for the front wheels 3F, the internal combustion engine 10, a hydraulic clutch 93, the drive motor 31, and the automatic transmission 23. The configuration of each of the internal combustion engine 10, the drive motor 31, and the automatic transmission 23 may be the same as that of respective one of the internal combustion engine 10, the drive motor 31, and the automatic transmission 23 provided to the vehicle drive system 1, which has been described in the above embodiment. In the vehicle drive system 91, the crankshaft 11 of the internal combustion engine 10 is connected to a motor shaft 97 of the drive motor 31 via the hydraulic clutch 93. The motor shaft 97 is connected to the automatic transmission 23, and the drive torque output from the automatic transmission 23 is transmitted to the front wheels 3F via the front-wheel driveshaft 7F and the front-wheel differential mechanism 5F.

The hydraulic clutch 93 is one of the hydraulic actuation sections, is engaged when the hydraulic pressure is supplied thereto via a valve unit 95, and allows the power transmission between the crankshaft 11 and the motor shaft 97 of the drive motor 31. Meanwhile, the hydraulic clutch 93 is disengaged when the supplied hydraulic pressure is reduced, and consequently disallows the power transmission between the crankshaft 11 and the motor shaft 97 of the drive motor 31. In an engaged state of the hydraulic clutch 93, the vehicle drive system 91 is controlled in the hybrid drive control mode in which the drive torque output from the internal combustion engine 10 and the drive torque output from the drive motor 31 are transmitted to the front wheels 3F via the automatic transmission 23, the front-wheel driveshaft 7F, and the front-wheel differential mechanism 5F. Meanwhile, in a disengaged state of the hydraulic clutch 93, the vehicle drive system 91 is controlled in the motor drive control mode in which the drive torque output from the drive motor 31 is transmitted to the front wheels 3F via the automatic transmission 23, the front-wheel driveshaft 7F, and the front-wheel differential mechanism 5F.

The valve unit 95 includes plural solenoid control valves that are driven and controlled by the vehicle controller 100 to adjust the hydraulic pressure to be supplied to the respective hydraulic actuation sections. In this embodiment, the valve unit 95 corresponds to the hydraulic pressure control unit, and adjusts the hydraulic pressure to be supplied to the hydraulic clutch 93 and each of the hydraulic actuation sections in the automatic transmission 23. In addition, the vehicle drive system 91 includes: the mechanical oil pump 43 that is connected to the crankshaft 11 via the gear mechanism 41 and is driven by the power of the internal combustion engine 10; and the electric oil pump 51 that is driven by the electric motor.

Of the configuration of the vehicle drive system 91, the configuration other than the points described above can be the same as that of the above-described vehicle drive system 1. Thus, a detailed description thereon will not be made. In the vehicle drive system 91, the hydraulic pressure is supplied to the hydraulic actuation sections in the automatic transmission 23 in the motor drive control mode. Meanwhile, in the hybrid drive control mode, the hydraulic pressure is supplied to the hydraulic clutch 93 and the hydraulic actuation sections in the automatic transmission 23, and the drive torque to be transmitted to the front wheels 3F is controlled. Similarly, in the vehicle drive system 91 illustrated in Fig. 8, the vehicle controller 100 can execute the control mode setting processing and the electric oil pump control processing according to the flowcharts illustrated in Fig. 3 to Fig. 5.

However, in the vehicle drive system 91, in the case where the automatic transmission 23 is operated in the motor drive control mode, in step S33, the first target rotational frequency is set to an appropriate value that exceeds zero, and the electric oil pump 51 is driven. The first target rotational frequency in this case is a lower value than the second target rotational frequency, which is set in the case where it is determined in step S37 that the vehicle is in such a travel state that the internal combustion engine 10 is started (S35/Yes). Meanwhile, the second target rotational frequency is set to the high rotational frequency such that the sufficient hydraulic pressure to engage the hydraulic clutch 93 and to operate the automatic transmission 23 is supplied to the valve unit 95.

Also, in the vehicle drive systems 81, 91 illustrated in Fig. 7 and Fig. 8, the electric power consumption amount by the electric oil pump 51 is reduced while each of the vehicle drive systems 81, 91 is controlled in the motor drive control mode. In addition, in the case where the start of the internal combustion engine 10 is predicted while each of the vehicle drive systems 81, 91 is controlled in the motor drive control mode, the electric oil pump 51 is driven at the relatively high second target rotational frequency in advance prior to the initiation of the start operation of the internal combustion engine 10. As a result, the sufficient hydraulic pressure is supplied to the valve unit 25 while the control mode of each of the vehicle drive systems 81, 91 transitions from the motor drive control mode to the hybrid drive control mode, and the hydraulic pressure can promptly be supplied to the hydraulic actuation sections in the automatic transmission 23 after the start of the internal combustion engine 10.

Here, each of the vehicle drive systems 81, 91 illustrated in Fig. 7 and Fig. 8 is the system applied to a front-wheel-drive vehicle, in which the drive torque output from the internal combustion engine 10 and the drive torque output from the drive motor 31 are transmitted to the front wheels 3F. However, each of the vehicle drive systems 81, 91 may be configured as a system applied to a rear-wheel-drive vehicle in which the drive torque output from the internal combustion engine 10 and the drive torque output from the drive motor 31 are transmitted to the rear wheels 3R. Alternatively, each of the vehicle drive systems 81, 91 may be configured as a system applied to a four-wheel-drive vehicle in which the drive torque output from the internal combustion engine 10 and the drive torque output from the drive motor 31 are distributed to the front wheels 3F and the rear wheels 3R.

The preferred embodiment of the present invention has been described in detail so far with reference to the accompanying drawings. However, the present invention is not limited to such an embodiment. It is obvious that a person who has basic knowledge in the technical field to which the present invention pertains could have easily arrived at various modification examples and application examples that fall within the scope of the present invention as defined in the appended claims.

## Claims

1. A vehicle controller (100) applied to a vehicle drive system (1, 81, 91) including: an internal combustion engine (10); at least one drive motor (31); a hydraulic pressure control unit (25, 85, 95) that controls supply of a hydraulic pressure to at least one hydraulic actuation section; a mechanical oil pump (43) that rotates by power of the internal combustion engine (10) and supplies the hydraulic pressure to the hydraulic pressure control unit (25, 85, 95); and an electric oil pump (51) that is driven by supplied electric power and supplies the hydraulic pressure to the hydraulic pressure control unit (25, 85, 95), the vehicle controller comprising:
a control mode setting section (111) that sets a control mode of the vehicle drive system (1, 81, 91) to a first control mode (EV) in which the internal combustion engine (10) is brought into a stopped state and the vehicle travels only by drive torque output from the drive motor (31) or a second control mode (HEV) in which the internal combustion engine (10) is brought into an operation state and the vehicle travels at least by drive torque output from the internal combustion engine (10); and
a pump control section (119) that controls driving of the electric oil pump (51), wherein
the pump control section (119) executes
processing to predict a start of the internal combustion engine (10) while the control mode of the vehicle drive system (1, 81, 91) is set to the first control mode (EV), increase a rotational frequency of the electric oil pump (51) when the start of the internal combustion engine (10) is predicted, and stop driving of the electric oil pump (51) after the internal combustion engine (10) is started and the control mode of the vehicle drive system (1, 81, 91) is set to the second control mode (HEV), wherein
the pump control section (119)
sets a target rotational frequency of the electric oil pump (51) to a specified first target rotational frequency (rs_tgt1) in a period when the control mode of the vehicle drive system (1, 81, 91) is set to the first control mode (EV) and the start of the internal combustion engine (10) is not predicted,
sets the target rotational frequency of the electric oil pump (51) to a second target rotational frequency (rs_tgt2) that is higher than the first target rotational frequency (rs_tgt1), and thereby increases the rotational frequency of the electric oil pump (51) when the control mode of the vehicle drive system (1, 81, 91) is set to the first control mode (EV) and the start of the internal combustion engine (10) is predicted,
sets the target rotational frequency of the electric oil pump (51) in a period until complete ignition of the internal combustion engine (10) is detected from the increase in the rotational frequency of the electric oil pump (51) to a specified third target rotational frequency (rs_tgt3), and
sets the target rotational frequency of the electric oil pump (51) in a specified period after the complete ignition of the internal combustion engine (10) is detected to a fourth target rotational frequency (rs_tgt4) that is lower than the second target rotational frequency (rs_tgt2).

2. The vehicle controller according to claim 1, wherein the vehicle drive system (1, 81, 91) includes, as the hydraulic actuation section, a hydraulic clutch (83, 93) that switchably allows/disallows power transmission between the internal combustion engine (10) and the drive motor (31), and
the pump control section (119)
sets the target rotational frequency of the electric oil pump (51) in a period until the hydraulic clutch (83, 93) is engaged after the detection of the complete ignition of the internal combustion engine (10) to the fourth target rotational frequency (rs_tgt4).

3. The vehicle controller according to claim 1 or 2, wherein
the pump control section (119) predicts that the internal combustion engine (10) is started when any one of the following is satisfied:
that an increase rate (Δacc) of an operation amount of an accelerator pedal is equal to or higher than a first threshold value (Δacc_thr), which is set in advance;
that the drive torque output from the drive motor (31) is equal to or higher than a second threshold value, which is set in advance;
that an increase rate of the drive torque output from the drive motor (31) is equal to or higher than a third threshold value, which is set in advance; and
that a speed of the vehicle is equal to or higher than a fourth threshold value, which is set in advance.

## Patentansprüche

1. Fahrzeugsteuerung (100), die auf ein Fahrzeugantriebssystem (1, 81, 91) angewandt wird, das Folgendes beinhaltet: einen Verbrennungsmotor (10); mindestens einen Antriebsmotor (31); eine Hydraulikdrucksteuereinheit (25, 85, 95), die eine Zufuhr eines Hydraulikdrucks zu mindestens einem hydraulischen Aktuationsbereich steuert; eine mechanische Ölpumpe (43), die sich durch eine Energie des Verbrennungsmotors (10) dreht und der Hydraulikdrucksteuereinheit (25, 85, 95) den Hydraulikdruck zuführt; und eine elektrische Ölpumpe (51), die von einer angelegten elektrischen Energie angetrieben wird und der Hydraulikdrucksteuereinheit (25, 85, 95) den Hydraulikdruck zuführt, wobei die Fahrzeugsteuerung Folgendes umfasst:
einen Steuermoduseinstellbereich (111), der einen Steuermodus des Fahrzeugantriebssystems (1, 81, 91) auf einen ersten Steuermodus (EV), in dem der Verbrennungsmotor (10) in einen gestoppten Zustand gebracht wird und das Fahrzeug nur durch ein Antriebsdrehmoment fährt, das vom Antriebsmotor (31) ausgegeben wird, oder einen zweiten Steuermodus (HEV) einstellt, in dem der Verbrennungsmotor (10) in einen Betriebszustand gebracht wird und das Fahrzeug mindestens durch ein Antriebsdrehmoment fährt, das vom Verbrennungsmotor (10) ausgegeben wird; und
einen Pumpensteuerbereich (119), der ein Antreiben der elektrischen Ölpumpe (51) steuert, wobei
der Pumpensteuerbereich (119) Folgendes ausführt Verarbeiten, um einen Start des Verbrennungsmotors (10) vorherzusagen, während der Steuermodus des Fahrzeugantriebssystems (1 81, 91) auf den ersten Steuermodus (IV) eingestellt ist, eine Drehfrequenz der elektrischen Ölpumpe (51) zu erhöhen, wenn der Start des Verbrennungsmotors (10) vorhergesagt wird, und das Antreiben der elektrischen Ölpumpe (51) zu stoppen, nachdem der Verbrennungsmotor (10) gestartet wurde und der Steuermodus des Fahrzeugantriebssystems (1, 81, 91) auf den zweiten Steuermodus (HEV) eingestellt ist,
wobei
der Pumpensteuerbereich (119)
eine Solldrehfrequenz der elektrischen Ölpumpe (51) in einer Periode, wenn der Steuermodus des Fahrzeugantriebssystems (1 81, 91) auf den ersten Steuermodus (EV) eingestellt ist und der Start des Verbrennungsmotors (10) nicht vorhergesagt ist, auf eine spezifizierte erste Solldrehfrequenz (rs_tgt1) einstellt,
die Solldrehfrequenz der elektrischen Ölpumpe (51) auf eine spezifizierte zweite Solldrehfrequenz (rs_tgt2), die höher ist als die erste Solldrehfrequenz (rs_tgt1), einstellt und dadurch die Drehfrequenz der elektrischen Ölpumpe (51) erhöht, wenn der Steuermodus des Fahrzeugantriebssystems (1, 81, 91) auf den ersten Steuermodus (EV) eingestellt ist und der Start des Verbrennungsmotors (10) vorhergesagt ist,
die Solldrehfrequenz der elektrischen Ölpumpe (51) in einer Periode, in der eine vollständige Zündung des Verbrennungsmotors (10) anhand der Drehfrequenz der elektrischen Ölpumpe (51) detektiert wird, auf eine spezifizierte dritte Solldrehfrequenz (rs_tgt3) einstellt, und
die Solldrehfrequenz der elektrischen Ölpumpe (51) in einer spezifizierten Periode, nachdem die vollständige Zündung des Verbrennungsmotors (10) detektiert wird, auf eine vierte Solldrehfrequenz (rs_tgt4) einstellt, die niedriger ist als die zweite Solldrehfrequenz (rs_tgt2).

2. Fahrzeugsteuerung nach Anspruch 1, wobei das Fahrzeugantriebssystem (1, 81, 91) als den hydraulischen Aktuationsbereich eine hydraulische Kupplung (83, 93) beinhaltet, die eine
Energieübertragung zwischen dem Verbrennungsmotor (10) und dem Antriebsmotor (31) umschaltbar zulässt/nicht zulässt, und
der Pumpensteuerbereich (119)
die Solldrehfrequenz der elektrischen Ölpumpe (51) in einer Periode, bis die hydraulische Kupplung (83, 93) nach der Detektion der vollständigen Zündung des Verbrennungsmotors (10) einrückt, auf die vierte Solldrehfrequenz (rs_tgt4) einstellt.

3. Fahrzeugsteuerung nach Anspruch 1 oder 2, wobei der Pumpensteuerbereich (119) vorhersagt, dass der Verbrennungsmotor (10) gestartet ist, wenn eines von Folgendem erfüllt ist:
dass eine Erhöhungsrate (Λacc) eines Betätigungsbetrags eines Gaspedals gleich oder höher als ein erster Schwellwert (Λacc_thr) ist, der vorab eingestellt wurde;
dass das Antriebsdrehmoment, das vom Antriebsmotor (31) ausgegeben wird, gleich oder höher als ein zweiter Schwellwert ist, der vorab eingestellt wurde;
dass eine Erhöhungsrate des Antriebsdrehmoments, das vom Antriebsmotor (31) ausgegeben wird, gleich oder höher als ein dritter Schwellwert ist, der vorab eingestellt wurde; und
dass eine Geschwindigkeit des Fahrzeugs gleich oder höher als ein vierter Schwellwert ist, der vorab eingestellt wurde.

## Revendications

1. Organe (100) de commande de véhicule appliqué à un système (1, 81, 91) d'entraînement de véhicule comprenant : un moteur (10) à combustion interne ; au moins un moteur (31) d'entraînement ; une unité (25, 85, 95) de régulation de pression hydraulique qui commande la fourniture d'une pression hydraulique à au moins une section d'actionnement hydraulique ; une pompe (43) à huile mécanique qui tourne sous l'action du moteur (10) à combustion interne et fournit la pression hydraulique à l'unité (25, 85, 95) de régulation de pression hydraulique ; et une pompe (51) à huile électrique qui est actionnée par une puissance électrique fournie et fournit la pression hydraulique à l'unité (25, 85, 95) de régulation de pression hydraulique, l'organe de commande de véhicule comportant :
une section (111) de réglage de mode de commande qui règle un mode de commande du système (1, 81, 91) d'entraînement de véhicule sur un premier mode de commande (EV) dans lequel le moteur (10) à combustion interne est amené dans un état arrêté et le véhicule circule uniquement sous l'effet du couple d'entraînement délivré à partir du moteur (31) d'entraînement ou un deuxième mode de commande (HEV) dans lequel le moteur (10) à combustion interne est amené dans un état de fonctionnement et le véhicule circule au moins sous l'effet du couple d'entraînement délivré à partir du moteur (10) à combustion interne ; et
une section (119) de commande de pompe qui commande l'entraînement de la pompe (51) à huile électrique,
la section (119) de commande de pompe exécutant un traitement pour prédire un démarrage du moteur (10) à combustion interne tandis que le mode de commande du système (1, 81, 91) d'entraînement de véhicule est réglé sur le premier mode de commande (EV), augmenter une fréquence de rotation de la pompe (51) à huile électrique lorsque le démarrage du moteur (10) à combustion interne est prédit, et arrêter l'entraînement de la pompe (51) à huile électrique après que le moteur (10) à combustion interne a été démarré et que le mode de commande du système (1, 81, 91) d'entraînement de véhicule a été réglé sur le deuxième mode de commande (HEV),
la section (119) de commande de pompe réglant une fréquence de rotation cible de la pompe (51) à huile électrique à une première fréquence de rotation cible (rs_tgt1) spécifiée dans une période où le mode de commande du système (1, 81, 91) d'entraînement de véhicule est réglé sur le premier mode de commande (EV) et où le démarrage du moteur (10) à combustion interne n'est pas prédit,
réglant la fréquence de rotation cible de la pompe (51) à huile électrique à une deuxième fréquence de rotation cible (rs_tgt2) qui est supérieure à la première fréquence de rotation cible (rs_tgt1), et augmentant ainsi la fréquence de rotation de la pompe (51) à huile électrique lorsque le mode de commande du système (1, 81, 91) d'entraînement de véhicule est réglé sur le premier mode de commande (EV) et que le démarrage du moteur (10) à combustion interne est prédit,
réglant la fréquence de rotation cible de la pompe (51) à huile électrique dans une période allant jusqu'à ce que l'allumage complet du moteur (10) à combustion interne soit détecté à partir de l'augmentation de la fréquence de rotation de la pompe (51) à huile électrique à une troisième fréquence de rotation cible (rs_tgt3) spécifiée, et
réglant la fréquence de rotation cible de la pompe (51) à huile électrique dans une période spécifiée après que l'allumage complet du moteur (10) à combustion interne a été détecté à une quatrième fréquence de rotation cible (rs_tgt4) qui est inférieure à la deuxième fréquence de rotation cible (rs_tgt2).

2. Organe de commande de véhicule selon la revendication 1,
le système (1, 81, 91) d'entraînement de véhicule comprenant, en tant que section d'actionnement hydraulique, un embrayage hydraulique (83, 93) qui autorise/interdit de façon commutable une transmission de puissance entre le moteur (10) à combustion interne et le moteur (31) d'entraînement, et
la section (119) de commande de pompe
réglant la fréquence de rotation cible de la pompe (51) à huile électrique dans une période allant jusqu'à ce que l'embrayage hydraulique (83, 93) soit mis en prise après la détection de l'allumage complet du moteur (10) à combustion interne à la quatrième fréquence de rotation cible (rs_tgt4).

3. Organe de commande de véhicule selon les revendications 1 ou 2,
la section (119) de commande de pompe prédisant que le moteur (10) à combustion interne est démarré lorsque l'une quelconque des conditions suivantes est satisfaite :
le fait qu'un taux d'accroissement (Δacc) d'une quantité d'action sur une pédale d'accélérateur soit supérieur ou égal à une première valeur seuil (Δacc_thr), qui est réglée à l'avance ;
le fait que le couple d'entraînement délivré à partir du moteur (31) d'entraînement soit supérieur ou égal à une deuxième valeur seuil, qui est réglée à l'avance ;
le fait qu'un taux d'accroissement du couple d'entraînement délivré à partir du moteur (31) d'entraînement soit supérieur ou égal à une troisième valeur seuil, qui est réglée à l'avance ; et
le fait qu'une vitesse du véhicule soit supérieure ou égale à une quatrième valeur seuil, qui est réglée à l'avance.
